# EUROPÄISCHE PATENTSCHRIFT

(11) **EP 0 698 701 B1**
(45) Veröffentlichungstag und Bekanntmachung des Hinweises auf die Patenterteilung: **10.02.1999**
(21) Anmeldenummer: 95112186.2
(22) Anmeldetag: 03.08.1995
(51) Int. Cl.: E04F 11/02, F16B 2/04, F16B 5/06, F16B 12/20

(54) **Trittstufenverankerung**
Stair step trace
Fixation de marche d'escalier

(30) Priorität: 20.08.1994 DE 4429657
(43) Veröffentlichungstag der Anmeldung: 28.02.1996
(73) Patentinhaber: Treppenmeister Partnergemeinschaft Holztreppenhersteller GmbH, D-71131 Jettingen (DE)
(72) Erfinder: Bucher, Adolf, D-71131 Jettingen (DE)
(74) Vertreter: Hössle, Markus, Dipl.-Phys.

(56) Entgegenhaltungen:
- EP-A- 0 300 152
- DE-A- 4 215 435
- DE-U- 9 106 365

## Beschreibung

Die Erfindung betrifft eine Trittstufenverankerung in einer Treppenwange oder -seitenwand.

Bei hölzernen Wangentreppen ist es üblich, beide Wangen entlang ihrer Länge, unabhängig von der Art der Trittstufenbefestigung, an mehreren Stellen quer miteinander zu verspannen. Dazu dienen Zuganker, die jeweils durch eine oder unterhalb einer Trittstufe verlaufen. Die Zuganker müssen vor der Wangenmontage von ihrem Kopfende aus durch die eine meist wandseitige Wange eingeführt sein. Dann werden die Trittstufen in vorbereitete Nuten beider Wangen eingeschoben, worauf man die Wangen mit Hilfe der Zuganker miteinander verspannt. Abgesehen von dem nachteiligen Aufwand der hohe Genauigkeit erfordernden Zerspannungsarbeiten für die Wangennuten entstehen aufgrund der bei dieser Trittstufenbefestigung vorhandenen Kontaktstellen zwischen Wangen, Trittstufen und Zugankern beim Begehen der Treppe unerwünschte Körperschallübertragungen ins Bauwerk. Auch dann, wenn gemäß einer anderen Befestigungsart die Trittstufen mit Hilfe von an der Wange angeschraubten Winkelprofilen abgestützt und befestigt werden, läßt sich, abgesehen vom Nachteil der weitgehend sichtbaren Winkelprofile oder ähnlicher Abstützteile, eine Körperschallübertragung ins Bauwerk nicht vermeiden.

Aus der DE 42 15 435 Al ist eine schalldämmende Verbindung zwischen einer Bauwerkswand oder einem an diese angeschlossenen Bauteil einerseits und einem an der Bauwerkswand oder dem Bauteil zu befestigenden Gegenstand, beispielsweise zwischen einer Trittplatte und einer Treppenwange bekannt. Die Verbindung besteht aus einer von der Wangeninnenseite ausgehenden Blindbohrung mit einer konischen Erweiterung, in die ein mit einem Spreizkonus versehener Stehbolzen und eine auf dessen Schaft verschiebbare Spreizhülse eingeführt sind, die eine metallische Innenhülse und einen elastischen Mantel aufweist und deren vorderes Ende durch Auftreiben auf den Spreizkonus gespreizt wird. Der in eine von der Stirnseite der Trittplatte ausgehende und sich bis zu einer von unten zugänglichen Ausnehmung erstreckende Bohrung eingeführte Stehbolzenschaft wird mittels einer Mutter zwischen der Anlage seines Spreizkonus an der Spreizhülse und der Ausnehmung verspannt, wobei der aus der Wangenbohrung herausragende elastische Mantel zwischen Wange und Trittplatte schalldämmend wirkt.

Aufgabe der Erfindung ist eine demgegenüber verbesserte Trittstufenverankerung insbesondere in Wangen, die mit geringem Arbeitsaufwand, im Bedarfsfall bei schon im Bauwerk montierten Wangen bei guter Zugänglichkeit vollzogen werden kann und sich durch wirksame Schallisolierungseigenschaften, hohe Verankerungsfestigkeit, niedrige Gestehungskosten und vergleichsweise einfache Montagearbeiten auszeichnet.

Diese Aufgabe wird gemäß der Erfindung durch die Merkmale des Patentanspruches 1 gelöst. Der damit vorgeschlagene preisgünstig herstellbare und leicht handhabbare Verankerungsbeschlag läßt sich in eine unter Anwendung eines einzigen Bohrwerkzeuges in der Wange herstellbare Erweiterungsbohrung bequem einführen und durch Spreizung seiner Einsteckabschnitte selbst gegenüber hohen Auszugskräften wirksam verankern. Der durch die Spreizung herbeigeführte Verankerungseffekt tritt vorteilhafterweise gleichzeitig mit der Befestigung des Beschlages an der Trittstufe ein. Eine die Einsteckabschnitte überdeckende elastische und in Bereichen geteilte Hülse gewährleistet die wirksame Körperschalldämmung innerhalb der Wange; ihre aus der Wange herausragenden Hülsenenden können, alleine oder mit zusätzlichen Schalldämmungs-Zwischenlagen für eine weitergehende Schallisolierung im Abstand zwischen Wange und Trittstufe ausgenutzt werden. Vorteile ergeben sich außerdem aus der einfachen Anpaßbarkeit des Beschlages an unterschiedliche Stufenabmessungen, aus den weitgehend unzerstört und geschlossen bleibenden Sichtseiten von Wange und Trittplatte und aus der Tatsache, daß die Verankerung der Trittstufen vollkommen unabhängig davon erfolgen kann, ob die Wangen vorher oder nachher oder überhaupt mit Zugankern verspannt werden.

Weiter Merkmale und Vorteile der erfindungsgemäßen Trittstufenverankerung und der dazugehörenden Beschlagteile ergeben sich aus den Unteransprüchen und der Beschreibung von Ausführungsbeispielen anhand der Zeichnungen, wobei die Merkmale der Ansprüche und solche aus der Beschreibung jeweils durch technische Anpassungen ergänzt werden oder jeweils für sich oder in beliebiger anderer Kombination weitere Ausführungsformen der Erfindung bilden können.

Es zeigen, jeweils schematisch,
- Fig. 1: einen Schnitt durch eine erste Ausführungsform einer Trittstufenverankerung gemäß der Erfindung,
- Fig. la: eine Ansicht von unten auf den Verankerungsbesclllag mit geschnittener Treppenwange,
- Fig. 1b: einen Schnitt durch den Beschlag im Bereich der erweiterten Bohrung nach der Linie A-B in Fig. 1,
- Fig. 2: in gleicher Darstellung wie in Fig. 1 einen zweite Ausführungsform der Trittstufenverankerung nach der Erfindung,
- Fig. 3: eine Variante der Ausführungsform nach Fig. 2,
- Fig. 4: in ähnlicher Darstellung wie zuvor eine dritte Ausführungsform der Trittstufenverankerung nach der Erfindung,
- Fig. 5: eine Seitenansicht eines Verankerungsbeschlages gemäß einer weiteren Ausführungsform der Erfindung,
- Fig. 5a: eine Draufsicht auf das untere Beschlagteil nach Fig. 5,
- Fig. 5b: einen Schnitt durch den Beschlag von in Fig 5 nach der Linie C-D und
- Fig. 5c: eine Endansicht der gespreizten Einsteckabschnitte nach Fig. 5.

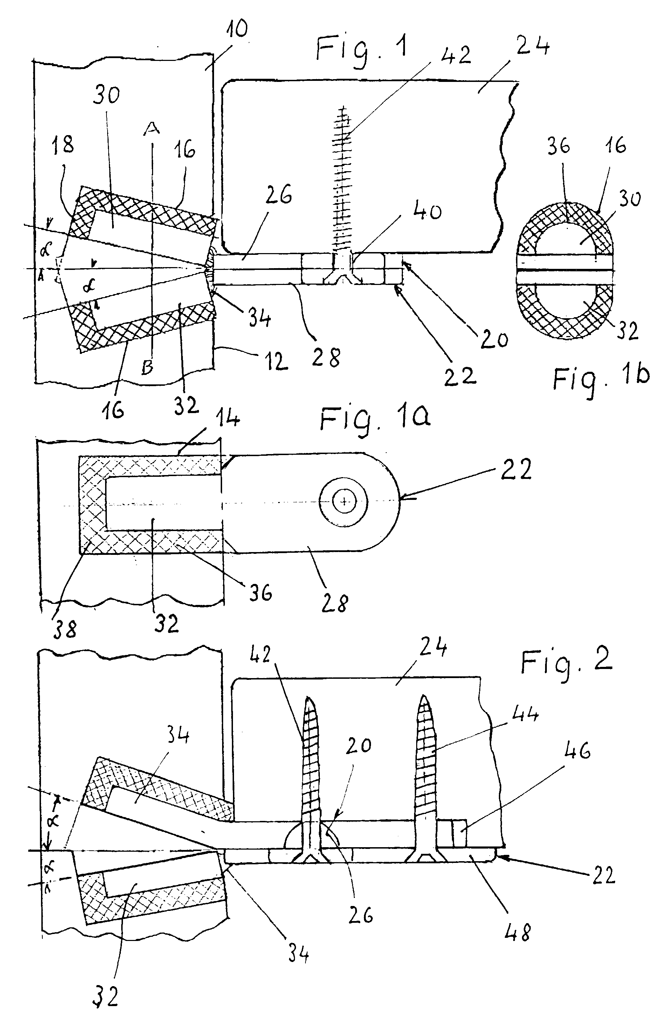

Eine hölzerne Treppenwange 10 oder eine vergleichbare Treppenseitenwand enthält auf ihrer den Trittstufen zugewandten Seitenfläche 12 eine senkrechte Blindbohrung 14 mit aus Fig. 1a erkennbaren relativen Abmessungen. Diese erste zylindrische Blindbohrung 14 wird nach Art eines Hinterschnittes in Tiefenrichtung dadurch erweitert, daß mit einem Werkzeug gleichen Durchmessers wie zuvor nach oben und unten jeweils unter einem Winkel α (im Bereich zwischen etwa 10° und 20°) geneigte Erweiterungen eingebracht werden, deren Mittelachsen 16, wie auch die Mittelachse der Erstbohrung 14, in der Zeichenebene von Fig. 1 liegen. Die auf diese Weise hinter dem im allgemeinen zylindrisch verbleibenden Bohrungseingang entstehende Erweiterungsbohrung hat einen etwa ovalen Querschnitt gemäß Fig. 1b. Vorzugsweise verläuft der Bohrungsgrund 18 der jeweiligen Erweiterung etwa senkrecht zu ihrer Mittelachse 16.

Ein Verankerungsbeschlag nach der Erfindung umfaßt ein oberes und ein unteres Beschlagteil 20 bzw. 22, die jeweils einen zur Befestigung an der Trittstufe 24 dienenden Anschlußabschnitt 26 bzw. 28 sowie einen zur Aufnahme und Verankerung in der Erweiterungsbohrung bestimmten Einsteckabschnitt 30 bzw. 32 aufweisen. Zur Verankerung einer Trittstufe sind im allgemeinen vier Verankerungsbeschläge, d.h. an jeder Wange zwei vorgesehen. Die miteinander fest verbundenen oder integralen Einsteck- und Anschlußabsclmitte jedes Beschlagteils sind in einem vorbestimmten, im allgemeinen dem Neigungsverlauf der jeweiligen Erweiterung entsprechenden Neigungswinkel zueinander angeordnet, so daß in montiertem Zustand gemäß Fig. 1 jeder Einsteckabschnitt zur Ebene seines Anschlußabschnittes in einem im Bereich zwischen 10° und 20° liegenden Winkel verläuft. Der theoretische Winkelscheitel befindet sich innerhalb einer Verbindungs- oder Übergangszone zwischen Einsteck- und Anschlußabschnitt.

Im Beispiel nach Fig. 1 bestehen die Anschlußabschnitte 26, 28 aus Flachstahlplatten, deren Umriß Fig. 1a entsprechen kann. Die Einsteckabschnitte 30, 32 bestehen jeweils aus einem Halbrundprofil etwa in der Form gemäß Fig. 1b und sind mittels einer Schweißnaht 34 an der Übergangsstelle mit den Anschlußabschnitten 26 bzw. 28 fest verbunden.

Vor dem Einführen des Verankerungsbeschlages in die Wangenbohrung werden die Einsteckabschnitte 30, 32 beider Beschlagteile 20, 22 mit ihren Flachseiten aufeinanderliegend gehalten, so daß sie gemeinsam etwa einem kreisrunden Vollprofil entsprechen, über das dann eine passende Hülse 36 aus schalldämmendem Material geschoben wird. Der Außenradius der Hülse 36 entspricht etwa dem der Erweiterungen der Wangenbohrung. Die mit einem Boden 38 versehene Hülse 36 ist längsgeteilt. Ihre Hälften können durch eine oder mehrere elastische oder zerreißbare Zonen, die sich vorzugsweise an ihrem dem Boden 38 entgegengesetzten Ende befinden, zwecks einfacherer Montage miteinander in Verbindung stehen. Beim Einführen sind die Anschlußabschnitte 26, 28 mit dem gleichen Winkel, wie in Fig. 1 für die Einsteckabschnitte 30, 32 gezeigt, zueinander gespreizt.

Um den in die Wangenbohrung eingeführten Verankerungsbeschlag wie in Fig. 1 an der Unterseite der Trittstufe 24 zu befestigen, werden die gespreizten Anschlußabschnitte 26, 28 von Hand in dem Maß einander angenähert, in dem sich die Einsteckabschnitte 30, 32 zusammen mit den Hälften der geteilten Hülse 36 mehr oder weniger widerstandsfrei spreizen lassen. Nachdem die Trittstufe 24 auf das obere Anschlußteil 26 aufgelegt worden ist, wird eine durch Öffnungen 40 beider Anschlußteile 26, 28 hindurchgesteckte Schraube 42 in eine Vor- oder Kernbohrung der Trittstufe eingedreht, womit der Beschlag verspannt und die erwünschte schallgedämmte Trittstufenverankerung wirksam wird. Sobald der in Fig. 1 gezeigte Zustand erreicht ist, bei dein die fest aufeinanderliegenden Anschlußteile 26, 28 mit der Trittstufe verschraubt sind, haben die Einsteckabschnitte 30, 32 ihre gespreizte Endlage erreicht, in der sie zusammen mit der jeweiligen Hälfte der Hülse 36 an den oberen und unteren Erweiterungen 16 der Wangenbohrung im allgemeinen parallel zu deren Wandungen unter Spannung anliegen.

Durch die beim Spreizen der Einsteckabschnitte 30, 32 auftretenden Spannkräfte entstehen im Beschlag in die Bohrungstiefe gerichtete Kraftkomponenten, aufgrund derer die Einsteckabschnitte 30, 32 bestrebt sind, solange in die Bohrungstiefe auszuweichen, bis sie eine Parallelität mit den jeweiligen Erweiterungen 16 der Wangenbohrung erreicht haben. Unter Berücksichtigung dieser Wirkungen kann die Länge der Einsteckabschnitte 30, 32 auf die axiale Länge der Erweiterungen 16 der Wangenbohrung abgestimmt und so bemessen sein, daß im gespreizt verspannten Endzustand des Verankerungsbeschlages die Bodenhälften 38 der Hülse 36 jeweils am Bohrungsgrund 18 anliegen und durch die freien Enden der Einsteckabschnitte 30, 32 nur wenig zusammengepreßt sind und so eine optimale Schalldämmung erhalten bleibt. Die Hülse 36 besitzt eine axiale Länge, mit der sie die Länge des jeweiligen Einsteckabschnittes 30, 32 vollflächig überdeckt, gleichzeitig mit ihrem Außenumfang an der Wandung der Erweiterungsbohrung anliegt und bei Bedarf mehr oder weniger schalldämmend nach außen über den Bohrungseingang vorsteht.

Fig. 2 zeigt einen Verankerungsbeschlag mit zwei unterschiedlichen Beschlagteilen. Der Anschlußabschnitt 26 des oberen Beschlagteils 20 besteht aus dem gleichen Halbrundprofil wie der Einsteckabschnitt 30, und beide Abschnitte sind unter einem vorbestimmten Neigungswinkel einteilig miteinander verbunden. Der an seiner Oberseite ninde Anschlußabschnitt 26 ist in einer in der Unterseite der Trittstufe 24 angebrachten entsprechenden Halbrundnut 46 aufgenommen. Das untere Beschlagteil 22 hat wie zuvor einen aus Halbrundprofil bestehenden Einsteckabschnitt 32 sowie einen mittels einer Schweißnaht 34 verbundenen Anschlußabschnitt in Form einer Flachstahlplatte 48, die breiter und länger ist als der obere Anschlußabschnitt 26 und somit die Nut 46 in der Trittstufe überdeckt. Im Hinblick auf die größere Länge des unteren Anschlußabschnittes 48 kann es zweckmäßig sein, diesen Verankerungsbeschlag mit Hilfe von zwei Schrauben 42 an der Trittstufe 24 zu befestigen.

Fig. 2 zeigt außerdem beispielhaft, daß anstelle gleicher oberer und unterer Neigungswinkel für die Erweiterungen 16 der Wangenbohning und für die Einsteckabschnitte 30, 32 grundsätzlich auch unterschiedliche Winkel zur Anwendung kommen können. Der obere Neigungswinkel liegt im gezeigten Beispiel bei 20°, und der untere bei etwa 10°. Dem Winkelmaß kann unter Berücksichtigung der jeweiligen Materialstärke insoweit Bedeutung zukommen, als das untere Beschlagteil 22 durch Belastung der Trittstufe stärker beansprucht ist und dort diesem Umstand durch einen flacheren Neigungswinkel (= größere projizierte Abstützfläche des unteren Einsteckabschnittes 32) Rechnung getragen wird. Aus ähnlicher Betrachtung kommt dem oberen Beschlagteil 20 vorwiegend die Aufgabe einer Verankerung der Trittstufe in horizontaler Richtung zu, da durch einen größeren Neigungswinkel eine höhere horizontale Auszugsfestigkeit erreicht wird.

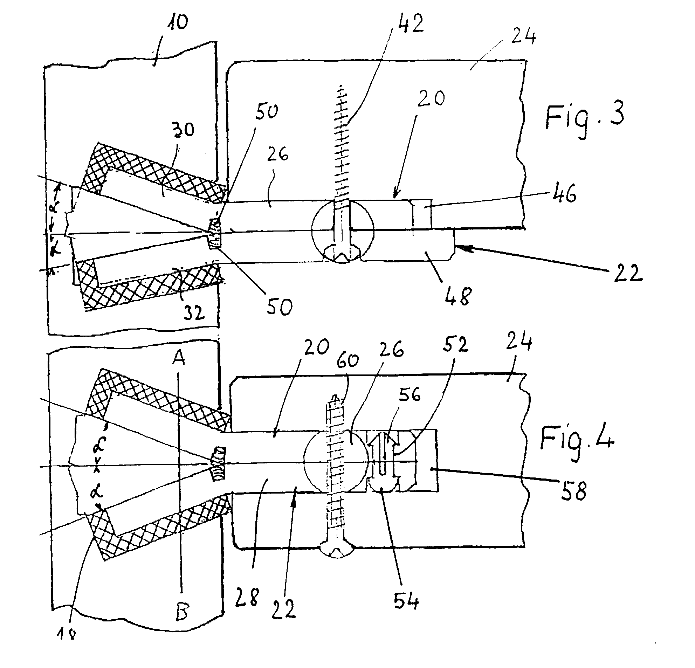

Gemäß Fig. 3 ist der in Verbindung mit Fig. 2 vorbeschriebene Beschlag dadurch variiert, daß das untere Beschlagteil 22 einteilig aus dem gleichen Halbrundprofil wie das obere Beschlagteil 20 gefertigt ist. Der Anschlußabschnitt 48 des unteren Beschlagteils ist zur Überdeckung des Endes der Aufnahmenut 46 in der Trittstufe 24 verlängert und enthält eine in seine Profilrundung eindringende Ansenkung für den Kopf der in die Trittstufe eingedrehten Holzschraube 42. Um bei stärkeren Abmessungen des Halbrundprofils den Biegevorgang zu vereinfachen und die Biegestelle in der Übergangszone zwischen Einsteck- und Anschlußabsclmitt genau festzulegen, kann das jeweilige Halbrundprofil an seiner Flachseite einen Sägeschnitt 50 geringer Tiefe enthalten.

Gemäß Fig. 4 bestehen beide Beschlagteile 20, 22 aus dem gleichen Halbrundprofil mit jeweils einteilig unter Einschluß des Neigungswinkels verbundenen Einsteck- und Anschlußabschnitten gleicher Länge. Die Anschlußabschnitte 26, 28 werden vor ihrer Befestigung an der Trittstufe durch geeignete Formschlußmittel zu einem kreisrunden Vollprofil miteinander verbunden. Als Beispiel für solche Formschlußmittel ist eine sich durch beide Anschlußabsclmitte 26, 28 erstreckende, an beiden Enden angesenkte Querbohrung 52 für einen aus Metall oder Kunststoff bestehenden Kopfbolzen 54 gezeigt, der ein sich hinter der Bohrungsverengung selbsttätig aufweitendes Spreizende 56 besitzt. Als andere Formschlußmittel können beide Anschlußabsclmitte einen im Durchmesser abgesetzten Endbereich aufweisen, auf den ein passender Spannring aufgeschoben ist, die die Anschlußabschnitte fest zusammenhält.

Als eine auch bei den zuvor beschriebenen Ausführungsbeispielen anwendbare Variante sind gemäß Fig. 4 die zu einem kreisrunden Vollprofil vereinigten Anschlußabschnitte 26, 28 in eine von der seitlichen Stirnfläche der Trittstufe 24 ausgehende Blindbohrung 58 eingeführt. - Anstelle oder zusätzlich zu einer der Befestigung des Beschlages an der Trittstufe vorausgehenden Verbindung beider Anschlußabsclmitte 26, 28 beliebiger Ausführungsformen mit Hilfe des vorbeschriebenen spreizenden Kopfbolzens oder einer oder mehrerer Schraubverbindungen mit Hilfe von Senkkopfschrauben kann zu diesem Zweck auch eine einzige Durchgangsschraube 60 dienen, die gemäß Fig. 4 ausgehend von der Unterseite der Trittstufe sich durch das Vollprofil der beiden Anschlußabschnitte hindurcherstreckt, diese zueinander positioniert hält und oberhalb der Nut 58 abermals in das Trittstufenmaterial eindringt.

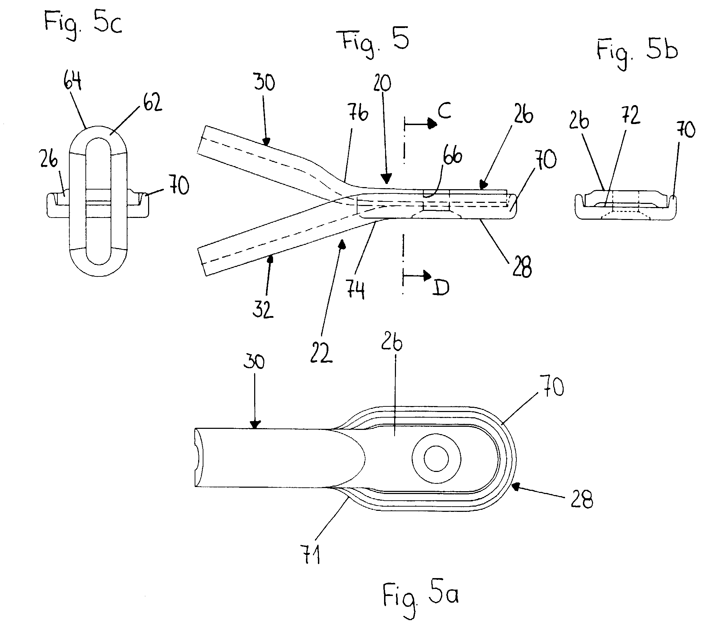

Bei einer in Fig. 5 bis 5c schematisch gezeigten bevorzugten Ausführungsform des erfindungsgemäßen Verankerungsbeschlages sind die oberen und unteren Beschlagteile 20 bzw.22 jeweils aus einem einteiligen Flachstahlstück hergestellt. Das Fachmaterial ist über die Länge des jeweiligen Einsteckabschnittes 30 bzw. 32 zu einer Rundrinne 62 verformt, deren im wesentlichen halbrundgewölbte Außenfläche 64 bei hohl aufeinandergelegten Einsteckabschnitten 30, 32 der oberen und unteren Beschlagteile ein nahezu geschlossenes Rundprofil bilden, so daß sie in die weiter oben beschriebene schalldämmende Hülse 36 aus elastischem Material eingeschoben/eingedrückt werden können. In diesem komplettierten oder vormontierten Zustand wird der Verankerungsbeschlag mit der Hülse 36 oran in die Wangenbohrung eingeführt.

Entsprechend Fig. 5 setzen sich die Einsteckabschnitte jeweils unter einem vorbestimmten - gleichen oder unterschiedlichen - Neigungswinkel jeweils in einen flachen Anschlußabschnitt 26 bzw. 28 fort, die grundsätzlich zueinander gleiche Formen und Materialstärke haben können und jeweils mindestens eine Durchgangsbohrung 66 enthalten, die im unteren Anschlußteil 28 zur vollständigen Aufnahme einer Befestigungsschraube mit einer konischer Erweiterung 68 ausgeführt sein kann.

Beim gezeigten Beispiel unterscheiden sich die oberen und unteren Beschlagteile 20, 22 voneinander insofern, als der untere Anschlußabschnitt 28, ausgehend von einem etwas breiteren und etwas längeren Flachmaterialstück, an beiden Seiten und wenigstens am freien Ende mit einem nach oben erhabenen Rand 70 versehen ist. Der durchgehende oder unterbrochene Rand 70 kann durch jede geeignete Materialverformung erzeugt werden, beispielsweise durch ein- oder mehrfache Biege-, Schlag- oder Tiefziehvorgänge. Der Rand 70 an beiden Seiten des Anschlußabschnittes 28 kann bis in den Übergangsbereich 71 zur Rinne 62 fortgesetzt sein, so daß er nach allen vier Richtungen als Begrenzung/Positionierung für den oberen Anschlußabschnitt 26 wirkt.

Entsprechend Fig. 5 sind beide Beschlagteile 20, 22 im Bereich ihrer Anschlußabschnitte gleich dick, obwohl die Wandstärke des unteren Beschlagteils 22 mit Rücksicht auf dessen höhere Lastbeanspruchung größer sein kann als beim oberen Beschlagteil. Dieser höheren Beanspruchung genügt das untere Beschlagteil durch die im Zuge seiner Materialverformung entstandene höhere Steifigkeit. Der Rand 70 erstreckt sich vertikal mindestens über die halbe Höhe des oberen Anschlußabschnittes 26, dessen Umriß an die durch den Rand 70 begrenzte Auflagefläche 72 des unteren Anschlußabschnittes 28 angepaßt ist und somit ein schnelles Ausrichten zueinander ermöglicht.

Die Festigkeit des unteren Beschlagteils 22 kann alternativ oder zusätzlich dadurch erhöht sein, daß der Scheitelbereich des zur Rinne 62 verformten Einsteckabschnittes 32 bis hinein in das angrenzende Ende, evtl. sogar bis an die Bohrung 68 des im übrigen flachen Anschlußabschnittes 28 reicht, wie dies an der Stelle 74 angedeutet ist. Die Rinne beginnt dann folglich im unteren Anschlußabschnitt 28 mit einem zunächst leicht nach unten gewölbten Übergang aus der Auflagefläche 72. Am oberen Beschlagteil 20 erstreckt sich die Rinnenform vorzugsweise nur über die Länge des Einsteckabschnittes 30, so daß in der Ansicht gemäß Fig. 5 eine gegebenenfalls gestufte Übergangszone 76 zum vollflächig an der Trittstufenunterseite anliegenden Anschlußabschnitt 26 vorhanden ist. Bei dieser Formgebung erübrigt sich eine zusätzliche Ausnehmung an der Trittstufe.

Für jeden der an der Unterseite einer Trittstufe befestigten Verankerungsbeschläge kann eine (nicht gezeigte) Abdeckkappe aus Kunststoff, Leichtmetall oder dergleichen formbaren Material vorgesehen sein, die entweder von unten aufgeschraubt wird oder am Rand 70 des unteren Anschlußabschnittes 28 klemmbar oder aufschiebbar ist.

## Patentansprüche

1. Trittstufenverankerung in einer Treppenwange oder -seitenwand mit einer waagerechten Blindbohrung (14) in der Wange oder Seitenwand, die vom Bohrungseingang aus in zwei zur Mittelachse entgegengesetzt geneigten Richtungen (16) erweitert ist, wobei die Mittelachse sowie beide Erweiterungsrichtungen in einer gemeinsamen, zur Trittstufenebene im wesentlichen senkrechten Ebene liegen,
gekennzeichnet durch:
- einen Verankerungsbeschlag, der ein oberes und ein unteres längliches Beschlagteil (20 bzw. 22) mit je einem Einsteckabschnitt (30, 32) und einem Anschlußabschnitt (26, 28) für die Trittstufe aufweist, wobei die jeweils mit einer halbrundförmigen Außenfläche versehenen Einsteckabschnitte gemeinsam als Rundprofil mit einer darübergeschobenen längsgeteilten Hülse (36) aus schalldämmendem Material in die Bohrung einführbar sind,
- eine im allgemeinen den gleichen Neigungswinkel wie die Bohrungserweiterung enthaltende, feste Verbindung zwischen dem Einsteckabschnitt (30, 32) und dem Anschlußabschnitt (26, 28) jedes Beschlagteils, wobei die Anschlußabschnitte einander gegenüberliegende Flachseiten aufweisen, so daß bei flachseitig aufeinanderliegenden Anschlußabschnitten die Einsteckabschnitte zueinander gespreizt sind,
- und Einrichtungen zum Verspannen der beiden Anschlußabschnitte (26, 28) im aufeinanderliegenden Zustand und zu deren fester Verbindung mit der Trittstufe (24),
- wobei die entgegengesetzt geneigten Richtungen (16) bezüglich der Mittelachse um etwa 10° bis 20° geneigt sind.

2. Trittstufenverankerung nach Anspruch 1, dadurch gekennzeichnet, daß die Einsteckabschnitte (30, 32) jeweils aus einem Halbrundprofil bestehen.

3. Trittstufenverankerung nach Anspruch 1 oder 2, dadurch gekennzeichnet, daß die Anschlußabschnitte (26, 28) aus Flachstahl bestehen und mit den winklig verlaufenden Einsteckabschnitten (30, 32) durch eine Schweißnaht (34) fest verbunden sind.

4. Trittstufenverankerung nach Anspruch 1 oder 2, dadurch gekennzeichnet, daß der Anschlußabschnitt wenigstens des oberen Beschlagteils (20) aus dem gleichen Halbrundprofil wie der Einsteckabschnitt besteht, sich einteilig an diesen unter dem vorbestimmten Neigungswinkel anschließt und in einer entsprechenden Profilnut (46) in der Unterseite der Trittstufe aufgenommen ist.

5. Trittstufenverankerung nach einem der vorhergehenden Ansprüche, dadurch gekennzeichnet, daß der Anschlußabschnitt (28) des unteren Beschlagteils (22) zur mindestens teilweisen Überdeckung einer den Anschlußabschnitt (26) des oberen Beschlagteils aufnehmenden Profilnut (46) in der Trittstufe länger und/oder breiter ist als der obere Anschlußabschnitt.

6. Trittstufenverankerung nach Anspruch 1 oder 2, dadurch gekennzeichnet, daß aus dem gleichen Halbrundprofil bestehende Anschlußabschnitte (26, 28) durch Formschlußmittel (52-56) zu einem kreisrunden Vollprofil verbindbar und in eine von der seitlichen Stirnseite der Trittstufe ausgehende Blindbohrung (58) einführbar sind.

7. Trittstufenverankerung nach Anspruch 6, dadurch gekennzeichnet, daß eine sich durch beide Anschlußabschnitte erstreckende Querbohrung (52) mit einem verengten Bereich zur Aufnahme eines aus Metall oder Kunststoff bestehenden Kopfbolzens (54) vorgesehen ist, der ein sich hinter der Bohrungsverengung selbsttätig aufweitendes Spreizende (56) hat.

8. Trittstufenverankerung nach Anspruch 6 oder 7, dadurch gekennzeichnet, daß als Formschlußmittel beide Anschlußabschnitte (26, 28) an ihren freien Enden einen im Durchmesser abgesetzten Bereich aufweisen, auf den ein auf die Durchmesserverringerung passender Spannring aufgeschoben ist, der die Anschlußabschnitte allein oder zusätzlich zu in Anspruch 6 oder 7 beschriebenen Maßnahmen fest zusammenhält.

9. Trittstufenverankerung nach Anspruch 1, dadurch gekennzeichnet, daß mindestens ein Beschlagteil aus einem einheitlichen Flachstahlstück besteht, dessen Einsteckabschnitt zu einer Rinne (62) mit halbrundförmiger Außenfläche (64) verformt ist und unter dem Neigungswinkel in den flachen AnAnschlußabschnitt übergeht.

10. Trittstufenverankerung nach Anspruch 9, dadurch gekennzeichnet, daß der Anschlußabschnitt (28) des unteren Beschlagteils (22) an beiden Seiten und am freien Ende einen aufgewölbten oder hochgebogenen Rand (70) aufweist, und daß der Anschlußabschnitt (26) des oberen Beschlagteils (20) in seinen Abmessungen an die durch den Rand (70) begrenzte Auflagefläche (72) des unteren Anschlußabschnittes (28) angepaßt und auf diese ausrichtbar ist.

11. Trittstufenverankerung nach Anspruch 9, dadurch gekennzeichnet, daß der Rand (70) wenigstens über die halbe Höhe bzw. Materialstärke des oberen Anschlußabschnittes (26) reicht.

12. Trittstufenverankerung nach einem der Ansprüche 9 bis 11, dadurch gekennzeichnet, daß der Scheitelbereich des zu einer Rinne (62) verformten Einsteckabschnittes des unteren Beschlagteils (22) sich bis in das angrenzende Ende des im übrigen flachen Anschlußabschnittes erstreckt.

13. Trittstufenverankerung nach einem der vorhergehenden Ansprüche, dadurch gekennzeichnet, daß die Anschlußabschnitte (26, 28) mindestens jeweils eine Durchgangsbohrung enthalten zur gemeinsamen Aufnahme einer von unten in die Trittstufe (24) reichenden (Holz-)Schraube.

14. Trittstufenverankerung nach einem der vorhergehenden Ansprüche, dadurch gekennzeichnet, daß die oberen und unteren Neigungswinkel der erweiterten Wangenbohrung voneinander verschiedene Werte im Bereich zwischen etwa 10° und 20° aufweisen.

15. Trittstufenverankerung nach einem der vorhergehenden Ansprüche, dadurch gekennzeichnet, daß die schalldämmende Hülse (36) eine die freien Enden der Einsteckabschnitte (30, 32) abdeckende Bodenwand (38) aufweist und sich die Längsteilung bis zu elastischen Zonen in der Nähe des offenen Hülsenendes erstreckt.

16. Trittstufenverankerung nach einem der vorhergehenden Ansprüche, dadurch gekennzeichnet, daß die schalldämmende Hülse (36) über eine vorbestimmte Länge aus der Öffnung der Blindbohrung (14) herausragt und mindestens einen Teil des Abstandes zwischen Wange und der benachbarten Stirnseite der Trittstufe ausfüllt.

17. Trittstufenverankerung nach einem der vorhergehenden Ansprüche, dadurch gekennzeichnet, daß der Scheitel der Neigungswinkel zwischen der Mittelachse der Blindbohrung (14) und jeder Erweiterung (16) innerhalb der Bohrung hinter deren Eingang angeordnet ist.

18. Trittstufenverankerung nach Anspruch 4 oder 6, dadurch gekennzeichnet, daß eine den Übergang zwischen Einsteck- und Anschlußabschnitt definierende Biegestelle des Halbrundprofils an dessen Flachseite durch einen Sägeschnitt (50) geringer Tiefe positioniert ist.

19. Trittstufenverankerung nach einem der Ansprüche 9 bis 11, dadurch gekennzeichnet, daß der an die Trittstufe befestigte Verankerungsbeschlag durch eine am Rand (70) des unteren Anschlußabschnittes klemmbare oder aufschiebbare Abdeckkappe abgedeckt ist.

## Claims

1. Stairway step anchoring in a stair string board or side wall with a horizontal blind hole (14) in the stringer or side wall which is expanded from the hole entrance in two directions (16) which are oppositely-inclined from the central axis, wherein the central axis and both expansion directions lie in a common plane which is substantially vertical to the stairway step plane, characterised by:
- an anchoring armature, which has an upper and a lower longitudinal armature part (20 or 22) each with an insertion section (30,32) and a connection section (26, 28) for the stairway step, wherein the insertion sections, each with a semi-circular outer surface, can be guided into the hole together as a round profile with a longitudinally-divided sleeve (36) of soundproofing material pushed over it,
- a fixed connection, enclosing substantially the same angle of inclination as the hole expansion, between the insertion section (30,32) and the connection section (26,28) of each armature part, wherein the connection sections have opposing flat sides, so that in the case of connection sections lying on top of one another with their flat sides, the insertion sections are splayed with regard to one another,
- and apparatus for tensioning the two connection sections (26,28) when they are lying on top of one another and for their fixed connection to the stairway step (24),
- wherein the oppositely-inclined directions (16) are inclined at approximately 10° to 20° with regard to the central axis.

2. A stairway step anchoring according to claim 1, characterised in that the insertion sections (30,32) each comprise a semi-circular profile.

3. A stairway step anchoring according to claim 1 or 2, characterised in that the connection sections (26,28) comprise flat steel and are fixed to the angularly extending insertion sections (30,32) by a welded seam (34).

4. A stairway step anchoring according to claim 1 or 2, characterised in that the connection section of at least the upper armature part (20) comprises the same semi-circular profile as the insertion section, connects as one part to this at the predetermined angle of inclination and is accepted into a corresponding profile groove (46) in the underside of the stairway step.

5. A stairway step anchoring according to one of the preceding claims, characterised in that the connection section (28) of the lower armature part (22) is longer and/or wider than the upper connection section for the purposes of at least partial covering of the profile groove (46) in the stairway step which accepts the connection section (26) of the upper armature part.

6. A stairway step anchoring according to claim 1 or 2, characterised in that connection sections (26,28) comprising the same semi-circular profile can be connected by form-locking means (52-56) into a circular full profile, and can be inserted into a blind hole (58) leading out from the lateral end wall of the stairway step.

7. A stairway step anchoring according to claim 6, characterised in that a transverse hole (52) extending through both connection sections is provided with a narrowed area to accept a metal or plastic set bolt (54), which has a spreading end (56) which automatically expands behind the narrow part of the hole.

8. A stairway step anchoring according to claim 6 or 7, characterised in that both connection sections (26, 28) have an area which is reduced in diameter at their free ends as a form-locking means, onto which a tensioning ring is pushed, this ring being adapted to the reduction in diameter, which holds the connection sections together firmly, either alone or in addition to measures described in claims 6 or 7.

9. A stairway step anchoring according to claim 1, characterised in that at least one armature part comprises a uniform flat steel piece, the insertion section of which is formed into a groove (62) with a semi-circular outer surface (64) and which merges into the flat connection section under the angle of inclination.

10. A stairway step anchoring according to claim 9, characterised in that the connection section (28) of the lower armature part (22) has a bulged or upwardly-bent edge (70) on both sides and at the free end, and that the connection section (26) of the upper armature part (20) is adapted in its measurements to the contact surface (72) of the lower connection section (28), limited by the edge (70), and can be orientated to this.

11. A stairway step anchoring according to claim 9, characterised in that the edge (70) extends over at least half the height, or the material thickness, of the upper connection section (26).

12. A stairway step anchoring according to one of claims 9 to 11, characterised in that the apex area of the insertion section of the lower armature part (22), which has been formed into a groove (62) extends as far as the adjacent end of the otherwise flat connection section.

13. A stairway step anchoring according to one of the preceding claims, characterised in that the connection sections (26,28) each have at least one through-hole for common acceptance of a (wood) screw which reaches from below into the stairway step (24).

14. A stairway step anchoring to one of the preceding claims, characterised in that the upper and lower angle of inclination of the extended string board hole have values which are different from one another in the range between approximately 10° and 20°.

15. A stairway step anchoring according to one of the preceding claims, characterised in that the soundproofing sleeve (36) has a base wall (38) which covers the free ends of the insertion sections (30,32) and the longitudinal division extends as far as the elastic zones near the open sleeve end.

16. A stairway step anchoring according to one of the preceding claims, characterised in that the soundproofing sleeve (36) extends by a predetermined length from the opening of the blind hole (14) and fills at least a part of the distance between the string board and the neighbouring end wall of the stairway step.

17. A stairway step anchoring according to one of the preceding claims, characterised in that the apex of the angle of inclination between the central axis of the blind hole (14) and each expansion (16) is arranged within the hole behind its entrance.

18. A stairway step anchoring according to claim 4 or 6, characterised in that a bending point of the semi-circular profile which defines the transition between insertion and connection section is positioned on its flat side by a shallow saw incision (50).

19. A stairway step anchoring according to one of claims 9 to 11, characterised in that the anchoring armature which is attached to the stairway step is covered by a covering lid which can be clamped or slid on to the edge (70) of the lower connection section.

## Revendications

1. Ancrage de marche d'escalier dans un limon ou une paroi latérale d'escalier, comprenant un perçage borgne horizontal (14) ménagé dans le limon ou la paroi latérale, qui s'évase à partir de son entrée dans deux directions (16) inclinées par rapport à l'axe médian, l'une en sens inverse de l'autre, l'axe médian et les deux directions de l'évasement étant contenus dans un plan commun sensiblement perpendiculaire au plan de la marche, caractérisé par
- une ferrure d'ancrage qui comprend une demi-ferrure allongée supérieure et une demi-ferrure allongée inférieure (20 et 22 respectivement) présentant chacune un segment d'encastrement (30, 32) et un segment d'assemblage (26, 28) destiné à recevoir la marche, les segments d'encastrement, qui présentent chacun une surface extérieure demi-ronde, pouvant être insérés dans le perçage sous la forme d'un profilé rond muni d'un gainage (36) en matière insonorisante, divisé dans la direction longitudinale, emmanché par dessus ces segments,
- un joint rigide, présentant sensiblement le même angle d'inclinaison que l'évasement du perçage, qui relie le segment d'encastrement (30, 32) au segment d'assemblage (26, 28) de chaque demi-ferrure, les segments d'assemblage présentant des faces plates en regard l'une de l'autre, de sorte que, lorsque les segments d'assemblage sont appuyés à plat l'un sur l'autre, les segments d'encastrement sont écartés l'un de l'autre,
- et des dispositifs servant à serrer les deux segments d'assemblage (26, 28) à l'état appuyés l'un sur l'autre et à les assembler rigidement à la marche (24),
- les directions (16) inclinées l'une en sens inverse de l'autre étant inclinées d'environ 10° à 20° par rapport à l'axe médian.

2. Ancrage de marche selon la revendication 1, caractérisé en ce que les segments d'encastrement (30, 32) sont constitués chacun par un profilé demi-rond.

3. Ancrage de marche selon la revendication 1 ou 2, caractérisé en ce que les segments d'assemblage (26, 28) sont faits d'acier plat et sont assemblés rigidement aux segments d'encastrement (30, 32) orientés angulairement par une soudure (34).

4. Ancrage de marche selon la revendication 1 ou 2, caractérisé en ce qu'au moins le segment d'assemblage de la demi-ferrure supérieure (20) est formé à partir du même profilé demi-rond que le segment d'encastrement, fait suite à ce dernier sous l'angle d'inclinaison prédéterminé en formant une seule pièce avec lui, et est logé dans une rainure profilée correspondante (46) ménagée dans la face inférieure de la marche.

5. Ancrage de marche selon une des revendications précédentes, caractérisé en ce que le segment d'assemblage (28) de la demi-ferrure inférieure (22) est plus long et/ou plus large que le segment d'assemblage supérieur afin d'obturer au moins partiellement la rainure profilée (46) de la marche qui reçoit le segment d'assemblage (26) de la demi-ferrure supérieure.

6. Ancrage de marche selon la revendication 1 ou 2, caractérisé en ce que les segments d'assemblage (26, 28) faits du même profilé demi-rond peuvent être assemblés par des moyens de liaison par sûreté de forme (52-56) pour former un profilé circulaire complet et peuvent être insérés dans un perçage borgne (58) qui prend naissance sur la face frontale latérale de la marche.

7. Ancrage de marche selon la revendication 6, caractérisé en ce qu'il est prévu un perçage transversal (52) qui traverse les deux segments d'assemblage et possède une région rétrécie destinée à recevoir une cheville à tête (54) faite de métal ou de matière plastique, qui présente une extrémité expansible qui se dilate automatiquement au-delà du rétrécissement du perçage.

8. Ancrage de marche selon la revendication 6 ou 7, caractérisé en ce que, pour constituer les moyens de liaison par sûreté de forme, les deux segments d'assemblage (26, 28) présentent, à leurs extrémités libres, une région rétrécie en diamètre sur laquelle est emmanchée une bague de serrage adaptée au rétrécissement du diamètre, qui maintient les segments d'assemblage solidement assemblés, à elle seule ou en supplément de dispositions décrites dans la revendication 6 ou 7.

9. Ancrage de marche selon la revendication 1, caractérisé en ce qu'au moins une demi-ferrure est constituée par une pièce d'acier plat d'un seul tenant dont le segment d'encastrement est déformé en une gouttière (62) à surface extérieure demi-ronde (64) et se termine dans le segment d'assemblage plat en formant l'angle d'inclinaison.

10. Ancrage de marche selon la revendication 9, caractérisé en ce que le segment d'assemblage (28) de la demi-ferrure inférieure (22) présente, sur les deux côtés et à l'extrémité libre, un bord (70) recourbé ou replié vers le haut, et en ce que le segment d'assemblage (26) de la demi-ferrure supérieure (20) est adapté en dimensions à la surface de portée (72) du segment d'assemblage inférieur (28) qui est limitée par le bord (70), et peut être aligné sur cette surface.

11. Ancrage de marche selon la revendication 9, caractérisé en ce que le bord (70) se prolonge au moins sur la moitié de la hauteur ou de l'épaisseur de matière du segment d'assemblage supérieur (26).

12. Ancrage de marche selon l'une des revendications 9 à 11, caractérisé en ce que la région de sommet du segment d'encastrement de la demi-ferrure inférieure (22) qui est déformée en une gouttière (62) se prolonge jusque dans l'extrémité adjacente du segment d'assemblage lequel est plat par ailleurs.

13. Ancrage de marche selon l'une des revendications précédentes, caractérisé en ce que les segments d'assemblage (26, 28) comprennent chacun au moins un perçage traversant destiné à recevoir en commun une vis (à bois) qui se visse de bas en haut dans la marche (24).

14. Ancrage de marche selon l'une des revendications précédentes, caractérisé en ce que les angles d'inclinaison supérieur et inférieur du perçage évasé du limon présentent des valeurs différentes l'une de l'autre, dans l'intervalle compris entre environ 10° et 20°.

15. Ancrage de marche selon l'une des revendications précédentes, caractérisé en ce que le gainage insonorisant (36) présente une paroi de fond (38) qui recouvre les extrémités libres des segments d'encastrement (30, 32), et la partie longitudinale se prolonge jusqu'à des zones élastiques situées dans le voisinage de l'extrémité ouverte de la gaine.

16. Ancrage de marche selon l'une des revendications précédentes, caractérisé en ce que le gainage insonorisant (36) déborde au-delà de l'orifice du perçage borgne (14) sur une longueur prédéterminée et couvre au moins une partie de la distance entre le limon et la face frontale adjacente de la marche.

17. Ancrage de marche selon l'une des revendications précédentes, caractérisé en ce que le sommet de l'angle d'inclinaison entre l'axe médian du perçage borgne (14) et chaque évasement (16) est situé à l'intérieur du perçage, en arrière de l'entrée de celui-ci.

18. Ancrage de marche selon la revendication 4 ou 6, caractérisé en ce que la position de la zone de pliage du profilé demi-rond qui définit la transition entre le segment d'encastrement et le segment d'assemblage est fixée, au niveau de la face plate de ce profilé, par un trait de scie (50) de faible profondeur.

19. Ancrage de marche selon l'une des revendications 9 à 11, caractérisé en ce que la ferrure d'ancrage fixée à la marche est recouverte par un capuchon de recouvrement qui peut être coincé ou emmanché au niveau du bord (70) du segment d'assemblage inférieur.
